# EUROPEAN PATENT APPLICATION

(11) **EP 4 606 610 A1**
(43) Date of publication of application: **27.08.2025**
(21) Application number: 23879832.6
(22) Date of filing: 18.10.2023
(51) Int. Cl.: B60K 1/00, B60K 6/405, B60K 6/485, B60K 6/547, B60K 11/02, F16H 57/04

(54) **WORK VEHICLE**

(30) Priority: 21.10.2022 JP 2022169244
(71) Applicant: Kubota Corporation, Osaka 556-8601 (JP)
(72) Inventor: HIRASE, Yuji, Sakai-shi, Osaka 590-0908 (JP); YAGYU, Sumio, Sakai-shi, Osaka 590-0908 (JP); OKAZAKI, Kazuto, Sakai-shi, Osaka 590-0908 (JP); II, Tsunehiro, Sakai-shi, Osaka 590-0908 (JP); KOTANI, Shinsuke, Sakai-shi, Osaka 590-0908 (JP)
(74) Representative: Cabinet Beau de Loménie
(86) International application number: PCT/JP2023/037712
(87) International publication number: WO 2024/085189

(57) **Abstract**

Provided is a work vehicle having a motor configured to supply power to a travel device and a simplified cooling structure for cooling a cooling target. The work vehicle includes a travel device, a battery, motors 21 and 22 configured to supply power to the travel device, a case 12 housing the motors 21 and 22, and an inverter that operates the motors 21 and 22. The work vehicle also includes a storage portion 33 provided downward of the motors 21 and 22 inside the case 12 and storing a coolant A, and a pump that supplies the coolant A to the cooling target.

## Description

### Technical Field

The present invention relates to a cooling configuration in a work vehicle.

### Background Art

An example work vehicle is a tractor, some of which have a motor and a battery configured to supply power to a travel device, as disclosed in Patent Document 1.

### Prior Art Documents

### Patent Documents

Patent Document 1: JP 2014-65349A

### Disclosure of the Invention

### Problem to be Solved by the Invention

As shown in Patent Document 1, when the work vehicle has a motor configured to supply power to a travel device, a cooling target such as the motor or an inverter that operates the motor needs to be cooled.

An object of the present invention is to realize a simplified cooling structure for cooling a cooling target in a work vehicle having a motor configured to supply power to a travel device.

### Means for Solving Problem

A work vehicle of the present invention includes at least one travel device, a battery, a motor configured to supply power to the at least one travel device, a case housing the motor, an inverter configured to operate the motor, a storage portion provided downward of the motor inside the case and storing coolant, and a pump configured to supply the coolant to a cooling target.

According to the present invention, when a motor configured to supply power to a travel device is housed inside a case, a storage portion storing coolant is provided below the motor inside the case, and the coolant is supplied to a cooling target by a pump to cool the cooling target.

Because the case housing the motor is also used as a storage portion for storing the coolant, a dedicated tank or the like for storing the coolant is no longer necessary, thereby enabling the cooling structure for cooling the cooling target to be simplified.

In the present invention, preferably the work vehicle further includes a relay terminal provided on an outer periphery of the case and connected to the inverter, a current flow member provided inside the case and connected between the motor and the relay terminal, and a dispersion prevention portion provided inside the case and configured to prevent dispersion of the coolant from the storage portion to the current flow member.

According to the present invention, in order to connect the motor housed inside the case to the inverter disposed outside the case, a relay terminal is provided on the outer periphery of the case. The inverter is connected to the relay terminal, and, inside the case, a current flow member is connected between the motor and the relay terminal.

According to the present invention, the dispersion prevention portion prevents coolant that disperses toward the current flow member from the storage portion inside the case from adhering to the current flow member, thus enabling adhesion of coolant to the current flow member to be minimized and degradation of the current flow member due to adhesion of coolant to be suppressed.

In the present invention, preferably the work vehicle further includes a protrusion protruding inward of the case from an inner surface of the outer periphery of the case, and the dispersion prevention portion includes the protrusion.

According to the present invention, the dispersion prevention portion can be obtained by providing a protrusion on the inner surface of the outer periphery of the case, thus enabling the structure of the dispersion prevention portion to be simplified.

In the present invention, preferably the coolant stored in the storage portion is set to an amount at which a liquid level of the stored coolant is lower than the protrusion.

According to the present invention, coolant that disperses toward the current flow member from the storage portion inside the case must get past the protrusion, and thus the function provided by the protrusion of preventing coolant from adhering to the current flow member is highly effective. This is advantageous in terms of minimizing adhesion of coolant to the current flow member and suppressing degradation of the current flow member due to adhesion of coolant.

In the present invention, preferably the work vehicle further includes a plurality of attachment portions protruding from an outer periphery of the motor outward of the motor in a radial direction of a shaft of the motor, the motor is attached by the attachment portions to the outer periphery of the case at a portion facing the motor in a longitudinal direction of the shaft of the motor, and the dispersion prevention portion includes any of the plurality of attachment portions positioned in an area between the relay terminal and the storage portion as viewed in the longitudinal direction of the shaft of the motor.

According to the present invention, the attachment portions of the motor protrude from the outer periphery of the motor outward of the motor in the radial direction of the shaft of the motor, and are attached to the outer periphery of the case at a portion facing the motor in the longitudinal direction of the shaft of the motor.

For example, when the shaft of the motor extends in the front-back direction, the attachment portions of the motor are attached to the inner surface of a front portion (corresponding to outer periphery) or the inner surface of a back portion (corresponding to outer periphery) of the case.

According to the present invention, any of the attachment portions of the motor that are positioned in the area between the relay terminal and the storage portion serve as the dispersion prevention portion. When coolant disperses toward the current flow member from the storage portion inside the case, adhesion of coolant to the current flow member is prevented by the coolant hitting the attachment portions of the motor.

According to the present invention, the dispersion prevention portion can be obtained by effectively utilizing an existing portion of the motor, namely, the attachment portions, thus enabling the structure of the dispersion prevention portion to be simplified.

In the present invention, preferably the work vehicle further includes a relay terminal provided on an outer periphery of the case and connected to the inverter, and a current flow member provided inside the case and connected between the motor and the relay terminal, the relay terminal is provided on the outer periphery of the case at a portion horizontally outward of the motor, and an end portion of the storage portion that is closer to the relay terminal is provided more on an inward side of the case than is an end portion of the motor that is closer to the relay terminal.

According to the present invention, a relay terminal is provided on the outer periphery of the case, in order to connect the motor housed inside the case to the inverter disposed outside the case. The inverter is connected to the relay terminal, and, inside the case, a current flow member is connected between the motor and the relay terminal.

According to the present invention, the end portion of the storage portion that is closer to the relay terminal is provided more on the inward side of the case than is the end portion of the motor that is closer to the relay terminal, and the motor is located upward of the end portion of the storage portion that is closer to the relay terminal.

When the coolant disperses in multiple directions from the storage portion inside the case, the coolant mostly hits the motor, reducing the amount of coolant that disperses toward the current flow member, and thus enabling adhesion of coolant to the current flow member to be reduced and degradation of the current flow member due to adhesion of coolant to be suppressed.

In the present invention, preferably the work vehicle further includes a transmission case housing a transmission and coupled to the case, a partition passing through the storage portion inside the case and forming an area partitioned from the inside of the case, and a transmission shaft configured to transmit power from the transmission to a front travel device included in the at least one travel device and passing through the area of the partition, power from the motor is transmitted to the transmission, and from the transmission to a back travel device included in the at least one travel device, and the inside of the case is partitioned from the inside of the transmission case.

According to the present invention, a transmission case housing a transmission is coupled to the case housing the motor, and power from the motor is transmitted to the transmission, and from the transmission to a back travel device.

According to the present invention, in order to transmit power from the motor to a front travel device with this configuration, a partition that passes through the storage portion inside the case is provided. Inside the case, the motor is provided upward of the storage portion, and thus the motor and the partition are spaced apart from each other. The transmission shaft that transmits power from the transmission to the front travel device passes through the area inside the partition.

According to the present invention, by effectively utilizing the area of the case, the transmission shaft no longer needs to be disposed to bypass around the outside of the case, thus enabling the disposition structure of the transmission shaft that transmits power to the front travel device to be simplified. By effectively utilizing the area of the storage portion of the case, interference between the motor and the transmission shaft that transmits power to the front travel device can be readily avoided.

According to the present invention, the case and the transmission case are partitioned from each other, and the area inside the partition is partitioned from the inside of the case, and thus the coolant stored in the storage portion of the case is kept completely separate from lubricant in the transmission case.

In the present invention, preferably the work vehicle further includes an engine separate from the motor, the motor is a motor generator, and power from the engine and power from the motor generator are combined to generate combined power and the combined power is transmitted to the at least one travel device.

According to the present invention, the work vehicle is a hybrid work vehicle in which power from an engine and power from a motor generator are combined and transmitted to travel devices. The hybrid work vehicle is thereby also able to use the case housing the motor generator as a coolant storage portion, which is advantageous in terms of simplifying the cooling structure for cooling the cooling target.

### Brief Description of the Drawings

FIG. 1 is a left side view of a tractor.
FIG. 2 is a schematic diagram showing the inside of a clutch housing, a gear case, a motor case, and a transmission case.
FIG. 3 is a cross-sectional plan view of the clutch housing, the gear case, and the motor case.
FIG. 4 is a longitudinal left side view of the clutch housing, the gear case, and the motor case.
FIG. 5 is a left side view of the clutch housing and the motor case.
FIG. 6 is a front view of the clutch housing and the gear case.
FIG. 7 is a back view of the motor case.

### Best Mode for Carrying out the Invention

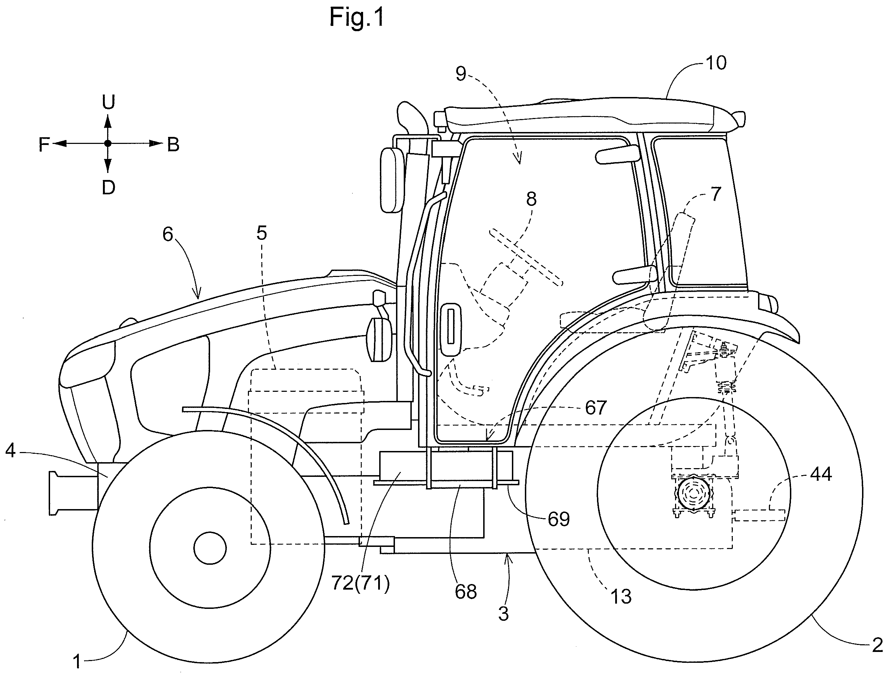

FIGS. 1 to 7 show a hybrid tractor serving as example of a work vehicle. In FIGS. 1 to 7, F indicates forward, B indicates backward, U indicates upward, D indicates downward, R indicates rightward, and L indicates the leftward.

### Overall Configuration of Tractor

As shown in FIG. 1, the tractor includes a body 3 supported by right and left front wheels 1 (corresponding to travel device) and right and left back wheels 2 (corresponding to travel device), a bonnet 6 provided in a front portion of the body 3, and a driving portion 9 provided in a back portion of the body 3.

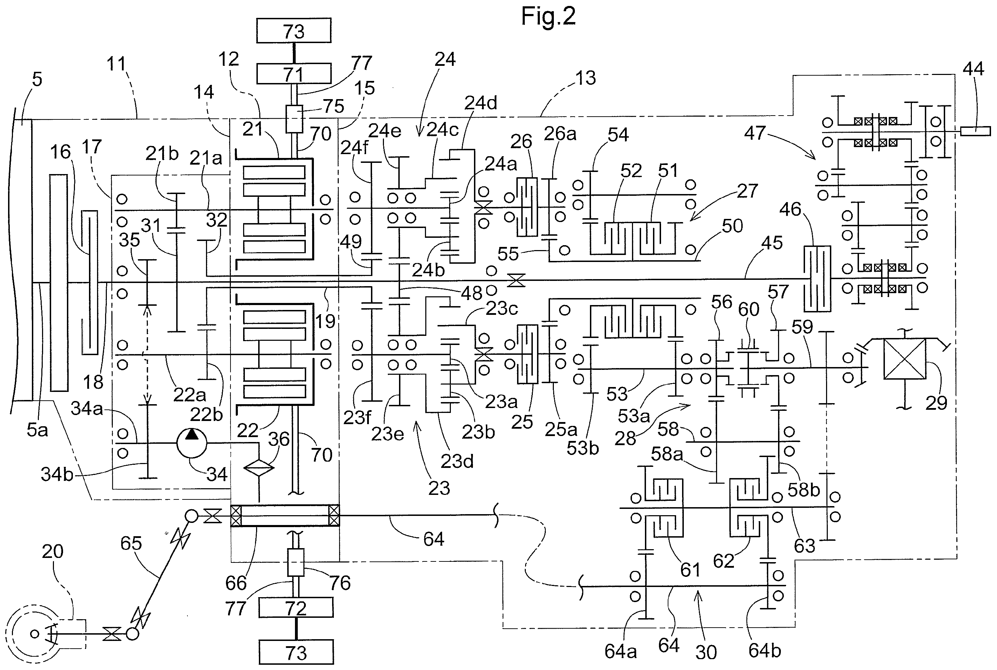

As shown in FIGS. 1 and 2, the body 3 includes an engine 5, a clutch housing 11 (corresponding to second case) coupled to the back of the engine 5, a motor case 12 (corresponding to case; first case) coupled to the back of the clutch housing 11, a transmission case 13 (corresponding to transmission case) coupled to the back of the motor case 12, and a front frame 4 coupled to the front of the engine 5.

The front wheels 1 are supported by the front frame 4, and the back wheels 2 are supported by a back portion of the transmission case 13. The bonnet 6 covers the engine 5. The driving portion 9 is covered by a cabin 10 and is provided with a driver's seat 7 and a control handle 8 for controlling the front wheels 1.

### Configuration of Transmission System to Front and Back Wheels

As shown in FIG. 2, the motor case 12 houses a first motor generator 21 (corresponding to motor) and a second motor generator 22 (corresponding to motor).

The transmission case 13 houses a first planetary device 23 (corresponding to transmission), a second planetary device 24 (corresponding to transmission), a first clutch 25, a second clutch 26, a forward-reverse switching device 27, an auxiliary gearbox 28, a back-wheel differential 29, and a front-wheel gearbox 30.

Power is mainly generated by the first motor generator 21 using power from the engine 5, and power is mainly output by the second motor generator 22.

Power from the engine 5 and power from the second motor generator 22 are transmitted to the first and second planetary devices 23 and 24 and combined. The first planetary device 23 outputs low-speed combined power, and the second planetary device 24 outputs high-speed combined power.

In response to the first clutch 25 being operated to a transmission state, the first planetary device 23 transmits the low-speed combined power to the forward-reverse switching device 27 via the first clutch 25. In response to the second clutch 26 being operated to a transmission state, the second planetary device 24 transmits the high-speed combined power to the forward-reverse switching device 27 via the second clutch 26.

The forward-reverse switching device 27 is operated to forward and reverse states by the low-speed combined power and the high-speed combined power. Power from the forward-reverse switching device 27 is transmitted to the auxiliary gearbox 28, and from the auxiliary gearbox 28 to the back wheels 2 via the back-wheel differential 29. Power diverted from between the auxiliary gearbox 28 and the back-wheel differential 29 is transmitted to the front-wheel gearbox 30, and from the front-wheel gearbox 30 to the front wheels 1 via the front-wheel differential 20.

### Correspondence of Configuration of Transmission System to Front and Back wheels with Claims

According to the configuration shown in FIG. 2, the first motor generator 21 (motor) and the second motor generator 22 (motor) configured to supply power to the front wheels 1 (travel device) and the back wheels 2 (travel device) are provided.

The engine 5 is provided separately from the first motor generator 21 (motor) and the second motor generator 22 (motor).

Power from the engine 5 and power from the second motor generator 22 (motor) are combined and transmitted to the front wheels 1 (travel device) and the back wheels 2 (travel device).

The first planetary device 23 (transmission) and the second planetary device 24 (transmission) that combine power from the engine 5 and power from the second motor generator 22 (motor) and transmit the combined power to the front wheels 1 (travel device) and the back wheels 2 (travel device) are provided.

The first planetary device 23 (transmission) and the second planetary device 24 (transmission) are provided on the opposite side of the motor case 12 (case; first case) to the clutch housing 11 (second case).

The motor case 12 (case; first case) housing the first motor generator 21 (motor) and the second motor generator 22 (motor) is provided.

The transmission case 13 (transmission case) housing the first planetary device 23 (transmission) and the second planetary device 24 (transmission) is coupled to the motor case 12 (case; first case).

Power from the first motor generator 21 (motor) and the second motor generator 22 (motor) is transmitted to the first planetary device 23 (transmission) and the second planetary device 24 (transmission), and from the first planetary device 23 (transmission) and the second planetary device 24 (transmission) to the front wheels 1 (travel device) and the back wheels 2 (travel device).

### Configuration of Clutch Housing and Motor Case

As shown in FIGS. 2, 3, and 4, the clutch housing 11 and the motor case 12 are integrally formed, and the back of the clutch housing 11 is coupled to the front of the motor case 12.

The inside of the clutch housing 11 is partitioned from the inside of the motor case 12 by a wall 14 of the motor case 12. The front of the clutch housing 11 is open and this open portion is closed by being coupled to the engine 5. The back of the motor case 12 is coupled to a wall 15 that partitions the inside of the motor case 12 from the inside of the transmission case 13.

The clutch housing 11 houses a dry clutch 16 and a gear case 17, with the clutch 16 being connected to an output shaft 5a of the engine 5. Connected to the clutch 16 is a transmission shaft 18 (corresponding to engine transmission shaft) that extends in the front-back direction from inside the clutch housing 11 to inside the transmission case 13 through the gear case 17 and the motor case 12.

Power from the engine 5 is transmitted to the first and second planetary devices 23 and 24 as described later, via the clutch 16 and the transmission shaft 18.

The gear case 17 is attached to the wall 14 of the motor case 12 at a portion on the opposite side to the inside of the motor case 12. The inside of the gear case 17 is partitioned from the area of the clutch housing 11 in which the clutch 16 is housed, and is partitioned from the inside of the motor case 12 by the wall 14 of the motor case 12.

### Correspondence of Configuration of Clutch Housing and Motor Case with Claims

According to the configuration shown in FIGS. 2, 3, and 4, the clutch housing 11 (second case) extending between the engine 5 and the motor case 12 (case; first case) is provided.

The clutch 16 configured to transmit and cut off power from the engine 5 to the transmission shaft 18 (engine transmission shaft) is housed inside the clutch housing 11 (second case).

The transmission shaft 18 (engine transmission shaft) that transmits power from the engine 5 passes through the motor case 12 (case; first case) from inside the clutch housing 11 (second case) and exists the motor case 12 (case; first case) on the opposite side to that on which the clutch housing 11 (second case) is provided.

The gear case 17 is housed inside the clutch housing 11 (second case). The gear case 17 is attached to the wall 14 partitioning the inside of the motor case 12 (case; first case) from the inside of the clutch housing 11 (second case) at a portion on the opposite side to the inside of the motor case 12 (case; first case).

### Configuration inside Gear Case and Motor Case

As shown in FIGS. 2, 3, and 4, extending in the front-back direction is a cylindrical transmission shaft 19 (corresponding to motor transmission shaft) that is rotatably supported with respect to the transmission shaft 18, and passes through the gear case 17 and the motor case 12 into the transmission case 13.

Inside the motor case 12, the first and second motor generators 21 and 22 are aligned in the left-right direction and supported by the wall 14 of the motor case 12. The transmission shafts 18 and 19 are provided between the first and second motor generators 21 and 22, with the first motor generator 21 on the right of the transmission shafts 18 and 19, and the second motor generator 22 on the left of the transmission shafts 18 and 19.

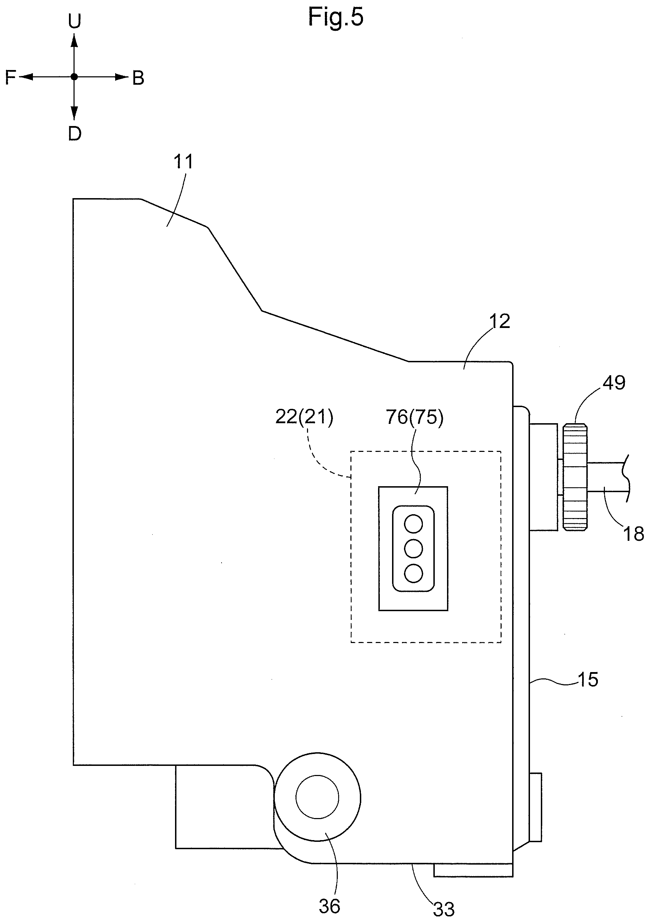

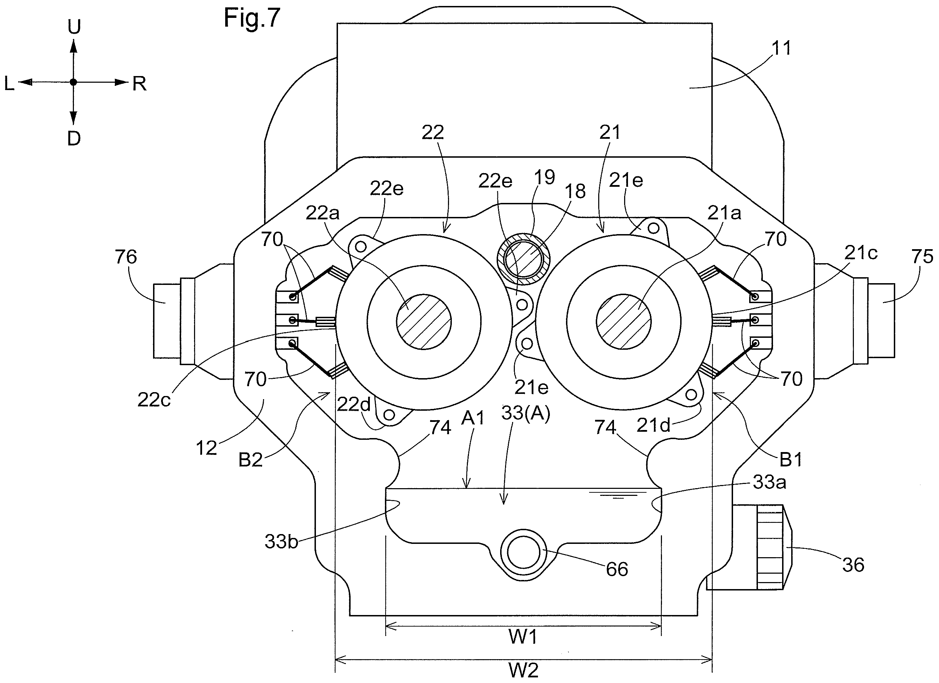

The first and second motor generators 21 and 22 are provided in such a manner that shafts 21a and 22a thereof extend in the front-back direction and are positioned lower than the transmission shafts 18 and 19 (see FIGS. 5 and 7). The shafts 21a and 22a of the first and second motor generators 21 and 22 extend forward into the gear case 17.

Inside the gear case 17, the transmission shaft 18 is coupled to a transmission gear 31 (corresponding to generator gear mechanism), and the shaft 21a of the first motor generator 21 is coupled to a transmission gear 21b (corresponding to generator gear mechanism). The transmission gear 31 engages the transmission gear 21b of the first motor generator 21. Power from the engine 5 is transmitted to the first motor generator 21 via the transmission shaft 18 and the transmission gear 31, and the first motor generator 21 generates power.

Inside the gear case 17, the transmission shaft 19 is coupled to a transmission gear 32 (corresponding to motor gear mechanism), and the shaft 22a of the second motor generator 22 is coupled to a transmission gear 22b (corresponding to motor gear mechanism). The transmission gear 32 engages the transmission gear 22b of the second motor generator 22.

Power from the second motor generator 22 is transmitted to the first and second planetary devices 23 and 24 as described later, via the transmission gear 32 and the transmission shaft 19.

### Correspondence of Configuration inside Gear Case and Motor Case with Claims

According to the configuration shown in FIGS. 2, 3, and 4, the transmission gear 31 (generator gear mechanism) and the transmission gear 21b (generator gear mechanism) of the first motor generator 21 that transmit power from the engine 5 to the first motor generator 21 (motor generator) and operate the first motor generator 21 (motor generator) to generate power are provided.

The transmission gear 31 (generator gear mechanism) and the transmission gear 21b (generator gear mechanism) of the first motor generator 21 are housed inside the clutch housing 11 (second case).

The transmission gear 32 (motor gear mechanism) that transmits power from the second motor generator 22 (motor) and the transmission gear 22b (motor gear mechanism) of the second motor generator 22 are housed inside the clutch housing 11 (second case).

The transmission shaft 19 (motor transmission shaft) passes through the motor case 12 (case; first case) from the transmission gear 32 (motor gear mechanism) and exists the motor case 12 (case; first case) on the opposite side to that on which the clutch housing 11 (second case) is provided.

### Configuration relating to First and Second Motor Generators

As shown in FIG. 2, the first and second motor generators 21 and 22 respectively have first and second inverters 71 and 72 provided therefor, and a battery 73 is provided.

In the case of the first motor generator 21 (second motor generator 22) operating as a motor and providing power to the transmission shaft 18 (transmission shaft 19), the first inverter 71 (second inverter 72) converts DC power from the battery 73 into AC power and supplies the AC power to the first motor generator 21 (second motor generator 22), and the first motor generator 21 (second motor generator 22) operates as a motor (drive mode).

In the case of the first motor generator 21 (second motor generator 22) being driven and operating as a generator, the first inverter 71 (second inverter 72) converts the AC power generated by the first motor generator 21 (second motor generator 22) into DC power and charges the battery 73 (regeneration mode). The battery 73 may be a capacitor (not shown).

Based on the state of work machinery (not shown) attached to the body 3, the travel state of the body 3, and the like, a controller (not shown) sets the regeneration mode and the drive mode of the first motor generator 21 and the regeneration mode and the drive mode of the second motor generator 22.

The basic travel state is a state in which the first motor generator 21 is set to the regeneration mode and the second motor generator 22 is set to the drive mode.

In the basic travel state, power from the engine 5 is transmitted to the first and second planetary devices 23 and 24 as described later, and power from the second motor generator 22 is transmitted to the first and second planetary devices 23 and 24.

By operating the clutch 16 to a disengaged state, it is also possible to stop the engine 5 and travel in the drive mode of the first motor generator 21 and the drive mode of the second motor generator 22.

### Configuration of First Planetary Device

As shown in FIG. 2, the first planetary device 23 includes a sun gear 23a, a plurality of planetary gears 23b and a carrier 23c, a ring gear 23d, and transmission gears 23e and 23f.

In the first planetary device 23, the transmission gear 23e is coupled to the ring gear 23d, and the transmission gear 23f is coupled to the sun gear 23a. The planetary gears 23b are rotatably supported by the carrier 23c and engage both the sun gear 23a and the ring gear 23d.

Inside the transmission case 13, the transmission shaft 18 is coupled to a transmission gear 48, and the transmission gear 23e of the first planetary device 23 engages the transmission gear 48. Inside the transmission case 13, the transmission shaft 19 is coupled to a transmission gear 49, and the transmission gear 23f of the first planetary device 23 engages the transmission gear 49.

Power from the engine 5 (or power from first motor generator 21) is transmitted to the ring gear 23d of the first planetary device 23, via the transmission shaft 18 and the transmission gear 48. Power from the second motor generator 22 is transmitted to the sun gear 23a of the first planetary device 23, via the transmission gear 32, the transmission shaft 19, and the transmission gear 49.

In the first planetary device 23, power from the engine 5 (or power from the first motor generator 21) and power from the second motor generator 22 are combined and adjusted for speed and torque, and output from the carrier 23c of the first planetary device 23 to the first clutch 25 as low-speed combined power.

### Configuration of Second Planetary Device

As shown in FIG. 2, the second planetary device 24 includes a sun gear 24a, a plurality of planetary gears 24b and a carrier 24c, a ring gear 24d, and transmission gears 24e and 24f.

In the second planetary device 24, the transmission gear 24e is coupled to the carrier 24c, and the transmission gear 24f is coupled to the sun gear 24a. The planetary gears 24b are rotatably supported by the carrier 24c and engage both the sun gear 24a and the ring gear 24d. Inside the transmission case 13, the transmission gear 24e of the second planetary device 24 engages the transmission gear 48 and the transmission gear 24f of the second planetary device 24 engages the transmission gear 49.

Power from the engine 5 (or power from the first motor generator 21) is transmitted to the carrier 24c of the second planetary device 24, via the transmission shaft 18 and the transmission gear 48. Power from the second motor generator 22 is transmitted to the sun gear 24a of the second planetary device 24, via the transmission gear 32, the transmission shaft 19, and the transmission gear 49.

In the second planetary device 24, power from the engine 5 (or power from first motor generator 21) and power from the second motor generator 22 are combined and adjusted for power and torque, and output from the ring gear 24d of the second planetary device 24 to the second clutch 26 as high-speed combined power.

### Configuration of Transmission System to Power Takeoff Shaft

As shown in FIG. 2, inside the transmission case 13, the transmission shaft 18 is coupled to a transmission shaft 45, and the transmission shaft 45 is connected to a power takeoff clutch 46. The tractor includes a power takeoff gearbox 47 and a power takeoff shaft 44 that is provided in a back portion of the transmission case 13 (see FIG. 1).

Power from the engine 5 is transmitted to the power takeoff gearbox 47 via the clutch 16, the transmission shafts 18 and 45, and the power takeoff clutch 46, and from the power takeoff gearbox 47 to the power takeoff shaft 44. In response to a piece of work machinery (not shown) being coupled to the back of the body 3, a transmission shaft (not shown) is connected between the power takeoff shaft 44 and the work machinery, and power from the power takeoff shaft 44 is transmitted to the work machinery.

### Configuration of Forward-Reverse Switching Device

As shown in FIG. 2, the forward-reverse switching device 27 includes a cylindrical shaft 50, a forward clutch 51, a reverse clutch 52, a transmission shaft 53, and a relay gear 54.

The cylindrical shaft 50 is rotatably supported with respect to the transmission shaft 45 and coupled to a transmission gear 55. The transmission gear 55 engages both the transmission gear 25a of the first clutch 25 and the transmission gear 26a of the second clutch 26.

The forward clutch 51 and the reverse clutch 52 are attached to the cylindrical shaft 50. The transmission shaft 53 is coupled to transmission gears 53a and 53b, with the transmission gear 53a of the transmission shaft 53 engaging an output gear of the forward clutch 51. The relay gear 54 engages both an output gear of the reverse clutch 52 and the transmission gear 53b of the transmission shaft 53.

In response to the first clutch 25 being operated to the transmission state, the first planetary device 23 transmits low-speed combined power to the cylindrical shaft 50 via the first clutch 25. In response to the second clutch 26 being operated to the transmission state, the second planetary device 24 transmits high-speed combined power to the cylindrical shaft 50 via the second clutch 26.

In the forward-reverse switching device 27, in response to the forward clutch 51 being operated to the transmission state, power is transmitted from the cylindrical shaft 50 to the transmission shaft 53 in the forward state via the forward clutch 51. In response to the reverse clutch 52 being operated to the transmission state, power is transmitted from the cylindrical shaft 50 to the transmission shaft 53 in the reverse state via the reverse clutch 52 and the relay gear 54.

### Configuration of Auxiliary Gearbox

As shown in FIG. 2, the auxiliary gearbox 28 includes a high-speed gear 56, a low-speed gear 57, a transmission shaft 58, a back-wheel output shaft 59, and a shift member 60.

The high-speed gear 56 is coupled to the transmission shaft 53 and engages a transmission gear 58a of the transmission shaft 58. The back-wheel output shaft 59 is supported concentrically with the transmission shaft 53, and the shift member 60 is slidably provided on the back-wheel output shaft 59. The low-speed gear 57 is rotatably supported by the back-wheel output shaft 59 and engages a transmission gear 58b of the transmission shaft 58.

In response to the shift member 60 being operated to engage the high-speed gear 56, the transmission shaft 53 is coupled to the back-wheel output shaft 59, and power from the transmission shaft 53 is transmitted to the back-wheel output shaft 59 in a high-speed state, and from the back-wheel output shaft 59 to the back wheels 2 via the back-wheel differential 29.

In response to the shift member 60 being operated to engage the low-speed gear 57, power from the transmission shaft 53 is transmitted to the back-wheel output shaft 59 in a low-speed state, via the high-speed gear 56, the transmission shaft 58, and the low-speed gear 57, and from the back-wheel output shaft 59 to the back wheels 2 via the back-wheel differential 29.

### Configuration of Front-Wheel Gearbox

As shown in FIG. 2, the front-wheel gearbox 30 includes a standard clutch 61, an acceleration clutch 62, a transmission shaft 63, and a front-wheel output shaft 64.

The standard clutch 61 and the acceleration clutch 62 are attached to the transmission shaft 63, and power from the back-wheel output shaft 59 is transmitted to the transmission shaft 63. The front-wheel output shaft 64 is coupled to transmission gears 64a and 64b, with the transmission gear 64a of the front-wheel output shaft 64 engaging an output gear of the standard clutch 61, and the transmission gear 64b of the front-wheel output shaft 64 engaging an output gear of the acceleration clutch 62.

In response to the front wheels 1 being operated within the range of the right and left setting angles from a straight travel position, the standard clutch 61 is operated to the transmission state in the front-wheel gearbox 30.

Power from the back-wheel output shaft 59 is transmitted to the front-wheel output shaft 64 via the transmission shaft 63 and the standard clutch 61, and to the front wheels 1 via the transmission shaft 65 and the front-wheel differential 20, and the front wheels 1 and the back wheels 2 are driven at the same speed.

In response to the front wheels 1 being steered to the right or left beyond the right and left setting angles, the acceleration clutch 62 is operated to the transmission state in the front-wheel gearbox 30.

Power from the back-wheel output shaft 59 is transmitted to the front-wheel output shaft 64 via the transmission shaft 63 and the acceleration clutch 62 and to the front wheels 1 via the transmission shaft 65 and the front-wheel differential 20, and the front wheels 1 are driven at a higher speed than the back wheels 2.

### Configuration relating to First Inverter and Second Inverter

As shown in FIG. 1, the tractor includes right and left steps 68 for getting in and out of the driving portion 9 that are provided on right and left portions of a floor 67 of the driving portion 9. The tractor includes right and left support members 69 that are coupled to right and left portions of the front portion of the transmission case 13, with the first inverter 71 being attached to the right support member 69, and the second inverter 72 being attached to the left support member 69.

The first inverter 71 is provided between the transmission case 13 and the right step 68 in plan view and downward of the right portion of the floor 67. The second inverter 72 is provided between the transmission case 13 and the left step 68 in plan view and downward of the left portion of the floor 67.

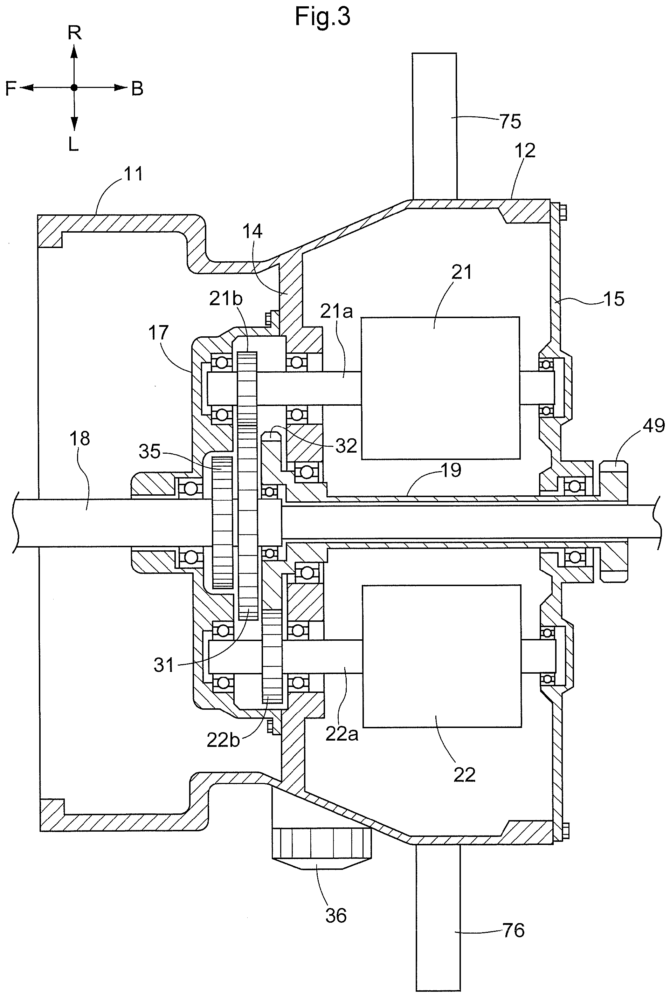

As shown in FIGS. 3 and 5, on the outer periphery of the motor case 12 at a right portion laterally outward of the first motor generator 21 (corresponding to right motor) is provided a first relay terminal 75 (corresponding to right relay terminal). On the outer periphery of the motor case 12 at a left portion laterally outward of the second motor generator 22 (corresponding to left motor) is provided a second relay terminal 76 (corresponding to left relay terminal).

As shown in FIGS. 2 and 7, on the outside of the motor case 12 is provided a harness 77 connected between the first inverter 71 and the first relay terminal 75. On the inside the motor case 12 is provided a flat power wire 70 (corresponding to current flow member) connected between a terminal provided on a right end portion 21c of the first motor generator 21 and the first relay terminal 75. The first motor generator 21 is thereby connected to the first inverter 71 via the harness 77, the first relay terminal 75, and the power wire 70.

On the outside of the motor case 12 is provided a harness 77 connected between the second inverter 72 and the second relay terminal 76. On the inside of the motor case 12 is provided a flat power wire 70 (corresponding to current flow member) connected between a terminal provided on a left end portion 22c of the second motor generator 22 and the second relay terminal 76. The second motor generator 22 is thereby connected to the second inverter 72 via the harness 77, the second relay terminal 76, and the power wire 70.

As shown in FIGS. 3 and 7, the shafts 21a and 22a of the first and second motor generators 21 and 22 extend in the front-back direction, and thus the radial direction of the shafts 21a and 22a of the first and second motor generators 21 and 22 is in the left-right and up-down directions.

The first motor generator 21, the first relay terminal 75, the first inverter 71, and the right power wire 70 overlap each other, as viewed in the left-right direction. The second motor generator 22, the second relay terminal 76, the second inverter 72, and the left power wire 70 overlap each other, as viewed in the left-right direction.

### Correspondence of Configuration relating to First and Second Inverters with Claims

According to the configuration shown in FIGS. 2, 3, 5, and 7, the battery 73 is provided. The first inverter 71 that operates the first motor generator 21 (motor) is provided outside the motor case 12 (case; first case). The second inverter 72 that operates the second motor generator 22 (motor) is provided outside the motor case 12 (case; first case).

The first relay terminal 75 connected to the first motor generator 21 (motor) and the first inverter 71 and connecting the first motor generator 21 (motor) and the first inverter 71 to each other is provided on the outer periphery of the motor case 12 (case; first case).

The second relay terminal 76 connected to the second motor generator 22 (motor) and the second inverter 72 and connecting the second motor generator 22 (motor) and the second inverter 72 to each other is provided on the outer periphery of the motor case 12 (case; first case).

The power wire 70 (current flow member) connected between the first motor generator 21 (motor) and the first relay terminal 75 is provided inside the motor case 12 (case; first case).

The power wire 70 (current flow member) connected between the second motor generator 22 (motor) and the second relay terminal 76 is provided inside the motor case 12 (case; first case).

The first relay terminal 75 is provided on the outer periphery of the motor case 12 (case; first case) at a portion facing the first motor generator 21 (motor) in the radial direction of the shaft 21a of the first motor generator 21 (motor).

The second relay terminal 76 is provided on the outer periphery of the motor case 12 (case; first case) at a portion facing the second motor generator 22 (motor) in the radial direction of the shaft 22a of the second motor generator 22 (motor).

The first relay terminal 75 is provided on the outer periphery of the motor case 12 (case; first case) at a portion horizontally outward of the first motor generator 21 (motor).

The second relay terminal 76 is provided on the outer periphery of the motor case 12 (case; first case) at a portion horizontally outward of the second motor generator 22 (motor).

The first motor generator 21 (motor) is provided in such a manner that the shaft 21a thereof extends in the front-back direction.

The second motor generator 22 (motor) is provided in such a manner that the shaft 22a thereof extends in the front-back direction.

The first relay terminal 75 is provided on the outer periphery of the motor case 12 (case; first case) at a portion laterally outward of the first motor generator 21 (motor).

The second relay terminal 76 is provided on the outer periphery of the motor case 12 (case; first case) at a portion laterally outward of the second motor generator 22 (motor).

The first motor generator 21 (motor) and the first relay terminal 75 overlap each other, as viewed in the radial direction of the shaft 21a of the first motor generator 21 (motor).

The second motor generator 22 (motor) and the second relay terminal 76 overlap each other, as viewed in the radial direction of the shaft 22a of the second motor generator 22 (motor).

The first motor generator 21 (right motor) and the second motor generator 22 (left motor) are aligned in the left-right direction.

The first relay terminal 75 (right relay terminal) connected to the first motor generator 21 (right motor) is provided on the outer periphery of the motor case 12 (case; first case) at a right portion laterally outward of the first motor generator 21 (right motor).

The second relay terminal 76 (left relay terminal) connected to the second motor generator 22 (left motor) is provided on the outer periphery of the motor case 12 (case; first case) at a left portion laterally outward of the second motor generator 22 (left motor).

### Configuration of Oil Pump for Cooling First and Second Motor Generators

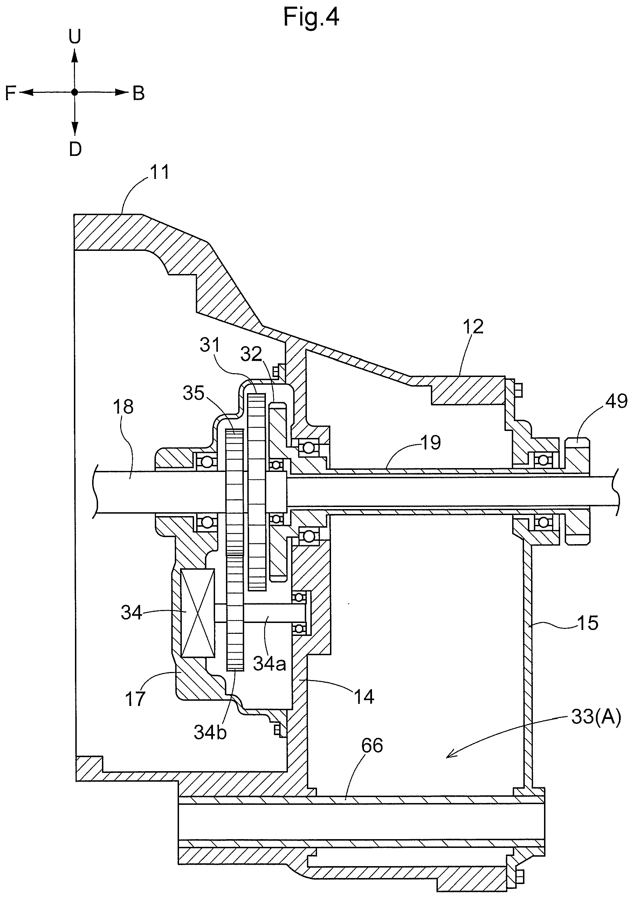

As shown in FIGS. 4 and 7, the inside of the motor case 12 is recessed at a lower portion in front view (back view) to form a storage portion 33, and stored in the storage portion 33 is a lubricant A (corresponding to coolant) having a relatively low viscosity.

As shown in FIGS. 2 and 4, provided in a lower front portion inside of the gear case 17 is an oil pump 34 (corresponding to pump) downward of the transmission shafts 18 and 19, and the oil pump 34 is supported by the wall 14 of the motor case 12 via the gear case 17. Inside the gear case 17, the oil pump 34 has a drive shaft 34a that extends in the front-back direction and is coupled to a transmission gear 34b (corresponding to pump gear mechanism).

Inside the gear case 17, the transmission shaft 18 is coupled to a transmission gear 35 (corresponding to pump gear mechanism), and the transmission gear 35 engages the transmission gear 34b of the oil pump 34. Power from the engine 5 is transmitted to the oil pump 34 via the transmission shaft 18 and the transmission gear 35 and the oil pump 34 is driven.

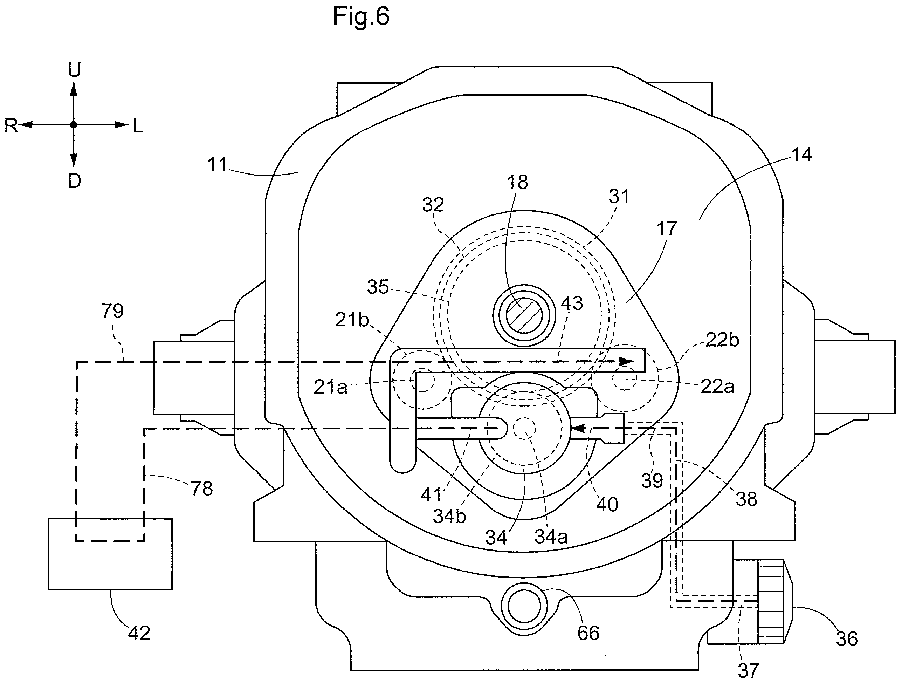

As shown in FIGS. 5, 6, and 7, in the lower left portion of the motor case 12 is provided a filter 36. As shown in FIG. 6, the wall 14 of the motor case 12 has oil channels 37, 38, and 39 formed therein. The oil channel 37 extends from the filter 36 toward the center of the motor case 12 in the left-right direction, the oil channel 38 extends upward from the end of the oil channel 37, and the oil channel 39 extends from the upper end of the oil channel 38 toward the center of the motor case 12 in the left-right direction.

The gear case 17 has oil channels 40, 41, and 43 formed therein, and outside the clutch housing 11 and the motor case 12 is provided an oil cooler 42. The oil channel 40 is connected from the oil channel 39 in the wall 14 of the motor case 12 to the oil pump 34. The oil channel 41 extends from the oil pump 34 and is connected to an oil channel 78 that extends from the oil channel 41 to the oil cooler 42. Connected to the oil cooler 42 is an oil channel 79 that extends from the oil cooler 42 to the oil channel 43, which extends in the left-right direction.

In response to the oil pump 34 being driven, the lubricant A in the storage portion 33 is supplied from the filter 36 to the oil pump 34 through the oil channels 37, 38, 39, and 40. The lubricant A discharged from the oil pump 34 is supplied to the oil channel 43 through the oil channels 41 and 78, the oil cooler 42, and the oil channel 79.

The lubricant A supplied to the oil channel 43 is supplied to the inside of a casing of the first motor generator 21 (corresponding to cooling target) through an oil channel (not shown) formed in the shaft 21a of the first motor generator 21 (not shown), and to inside a casing of the second motor generator 22 (corresponding to cooling target), via an oil channel (not shown) formed in the shaft 22a of the second motor generator 22.

The supplied lubricant A cools the first and second motor generators 21 and 22 and returns to the storage portion 33 from the first and second motor generators 21 and 22.

The lubricant A supplied to the oil channel 43 is supplied to the inside of the gear case 17 through an oil channel (not shown) formed in the transmission shaft 18. The supplied lubricant A lubricates and cools the shafts 21a and 22a of the transmission gears 21b and 22b of the first and second motor generators 21 and 22, the drive shaft 34a and the transmission gear 34b of the oil pump 34, the transmission gears 31, 32, and 35, and the like, and returns to the storage portion 33 from the gear case 17.

### Correspondence of Configuration of Oil Pump for Cooling First and Second Motor Generators with Claims

According to the configuration shown in FIGS. 4 and 6, the oil pump 34 (pump) that supplies the lubricant A (coolant) to the first and second motor generators 21 and 22 (cooling targets) is provided.

The oil pump 34 (pump) is housed inside the clutch housing 11 (second case) and supported by the gear case 17.

The coolant is the lubricant A, and the oil pump 34 (pump) supplies the lubricant A to the first and second motor generators 21 and 22 (cooling targets) and to the inside of the gear case 17.

The transmission gear 34b (pump gear mechanism) of the oil pump 34 (pump) and the transmission gear 35 (pump gear mechanism) that transmit drive power to the oil pump 34 (pump) are housed inside the clutch housing 11 (second case).

The gear case 17 housing the transmission gear 34b (pump gear mechanism) of the oil pump 34 (pump) and the transmission gear 35 (pump gear mechanism), the transmission gear 22b (motor gear mechanism) of the second motor generator 22 (motor) and the transmission gear 32 (motor gear mechanism), and the transmission gear 31b (generator gear mechanism) of the first motor generator 21 (motor) and the transmission gear 31 (generator gear mechanism) is provided.

The storage portion 33 that stores the lubricant A (coolant) is provided downward of the first motor generator 21 (motor) and the second motor generator 22 (motor) inside the motor case 12 (case; first case).

### Configuration relating to Storage Portion

As shown in FIG. 7, with regard to the storage portion 33 formed in a lower portion inside the motor case 12, the center thereof in the left-right direction is located in the center of the motor case 12 in the left-right direction. When the interval between a right end portion 33a and a left end portion 33b of the storage portion 33 is given as W1, and the interval between a right end portion 21c of the first motor generator 21 and a left end portion 22c of the second motor generator 22 is given as W2, the interval W1 is narrower than the interval W2.

The right end portion 33a of the storage portion 33 is thereby provided closer to the center the motor case 12 in the left-right direction than is the right end portion 21c of the first motor generator 21. Also, the left end portion 33b of the storage portion 33 is provided closer to the center of the motor case 12 in the left-right direction than is the left end portion 22c of the second motor generator 22.

Between the first relay terminal 75 and the right end portion 33a of the storage portion 33 is an area B1 that extends laterally outward and diagonally upward from the right end portion 33a of the storage portion 33, as viewed in the front-back direction (back view).

Between the second relay terminal 76 and the left end portion 33b of the storage portion 33 is an area B2 that extends laterally outward and diagonally upward from the left end portion 33b of the storage portion 33, as viewed in the front-back direction (back view).

### Correspondence of Configuration relating to Storage Portion with Claims

According to the configuration shown in FIG. 7, the right end portion 33a, which is the end portion of the storage portion 33 closer to the first relay terminal 75, is provided more on the inward side of the motor case 12 (case; first case) than is the right end portion 21c, which is the end portion of the first motor generator 21 (motor) that is closer to the first relay terminal 75.

The left end portion 33b, which is the end portion of the storage portion 33 closer to the second relay terminal 76, is provided more on the inward side of the motor case 12 (case; first case) than is the left end portion 22c, which is the end portion of the second motor generator 22 (motor) that is closer to the second relay terminal 76.

### Configuration relating to Front-Wheel Output Shaft

As shown in FIGS. 2, 4, 6, and 7, inside the motor case 12 is provided a cylindrical partition 66 coupled between the wall 14 and the wall 15 of the motor case 12. The partition 66 passes through the storage portion 33 downward of the center thereof in the left-right direction (downward of transmission shafts 18, 19), and between the partition 66 and the bottom of the motor case 12 (bottom of storage portion 33) is a gap.

The partition 66 is submerged in the lubricant A in the storage portion 33, below a liquid level A1 of the lubricant A. The lubricant A in the right and left areas of the storage portion 33 can flow between the two areas through the area on the upper side of the partition 66 and the area on the lower side of the partition 66 (gap between partition 66 and bottom of motor case 12 (bottom of storage portion 33)).

The area inside the partition 66 is partitioned from the inside of the motor case 12. The front-wheel output shaft 64 (corresponding to transmission shaft that transmits power from the transmission to the front travel device) extending from the front-wheel gearbox 30 passes through the area inside the partition 66 and protrudes forward from the motor case 12, and the front end portion thereof is connected to the transmission shaft 65 (see FIG. 2).

Lubricant is also stored in the transmission case 13. The lubricant in the transmission case 13 is used to lubricate the first planetary device 23, the second planetary device 24, the first clutch 25, the second clutch 26, the forward-reverse switching device 27, the auxiliary gearbox 28, the back-wheel differential 29, the front-wheel gearbox 30, the power takeoff clutch 46, and the power takeoff gearbox 47.

As aforementioned, the lubricant A having a relatively low viscosity is stored in the storage portion 33 of the motor case 12, and the lubricant A in the motor case 12 is different from the lubricant in the transmission case 13.

As shown in FIGS. 2 and 4, the inside of the motor case 12 is partitioned from the inside of the transmission case 13 by the wall 15 of the motor case 12, and the area inside the partition 66 is partitioned from the inside of the motor case 12, and thus the lubricant A in the storage portion 33 (motor case 12) is kept completely separate from the lubricant in the transmission case 13.

### Correspondence of Configuration relating to Front-Wheel Output Shaft with Claims

According to the configuration shown in FIGS. 2, 4, 6, and 7, the wall 15 of the motor case 12 (case; first case) partitions the inside of the motor case 12 (case; first case) from the inside of the transmission case 13 (transmission case).

The partition 66 that passes through the storage portion 33 of the motor case 12 (case; first case) and forms an area partitioned from the inside of the motor case 12 (case; first case) is provided.

The front-wheel output shaft 64 (transmission shaft) that transmits power from the first planetary device 23 (transmission) and the second planetary device 24 (transmission) to the front wheels 1 (front travel device) passes through the area inside the partition 66.

### Configuration relating to Preventing Dispersion of Lubricant from Storage Portion to Power Wire

As shown in FIG. 7, the motor case 12 is provided with right and left protrusions 74 (corresponding to dispersion prevention portion) that are integrally formed with the motor case 12 on the inner surface of the outer periphery thereof and protrude toward the center of the storage portion 33 in the left-right direction from the upper ends of the right and left end portions 33a and 33b.

In this case, the lubricant A stored in the storage portion 33 is set to an amount at which the liquid level A1 of the lubricant A is lower than the protrusions 74. Instead of being integrally provided on the inner surface of the outer periphery of the motor case 12, the protrusions 74 may be provided separately from the motor case 12 and attached to the inner surface of the outer periphery of the motor case 12.

On the outer periphery of the first motor generator 21 are formed a plurality of attachment portions 21d and 21e. The attachment portions 21d and 21e protrude from the outer periphery of the first motor generator 21 in the radial direction of the shaft 21a of the first motor generator 21 outward of the first motor generator 21 and extend parallel to the shaft 21a of the first motor generator 21.

On the outer periphery of the second motor generator 22 are formed a plurality of attachment portions 22d and 22e. The attachment portions 22d and 22e protrude from the outer periphery of the second motor generator 22 in the radial direction of the shaft 22a of the second motor generator 22 outward of the second motor generator 22 and extend parallel to the shaft 22a of the second motor generator 22.

On the inner surface of the wall 14 of the motor case 12 are formed a plurality of bosses (not shown), and the first motor generator 21 is coupled to the wall 14 of the motor case 12, by the attachment portions 21d and 21e of the first motor generator 21 being bolted to the bosses of the motor case 12. The second motor generator 22 is coupled to the wall 14 of the motor case 12, by the attachment portions 22d and 22e of the second motor generator 22 being bolted to the bosses of the motor case 12.

One attachment portion 21d (corresponding to dispersion prevention portion), among the attachment portions 21d and 21e of the first motor generator 21, is positioned in the area B1 between the first relay terminal 75 and the right end portion 33a of the storage portion 33 from above in such a manner as to be located upward of the right protrusion 74 as viewed in the front-back direction.

One attachment portion 22d (corresponding to dispersion prevention portion), among the attachment portions 22d and 22e of the second motor generator 22, is positioned in the area B2 between the second relay terminal 76 and the left end portion 33b of the storage portion 33 from above in such a manner as to be located upward of the left protrusion 74 as viewed in the front-back direction.

The lubricant A that disperses toward the power wire 70 from the storage portion 33 hits lower portions of the first and second motor generators 21 and 22, the right and left protrusions 74, and the attachment portions 21d and 22d of the first and second motor generators 21 and 22, thereby preventing adherence of the lubricant A to the power wire 70.

The lubricant A from the oil pump 34 is supplied to the inside of the casings of the first and second motor generators 21 and 22, and thus adherence of the lubricant A from the oil pump 34 to the power wire 70 when the lubricant A is supplied to the first and second motor generators 21 and 22 does not occur.

### Correspondence of Configuration relating to Preventing Dispersion of Lubricant from Storage Portion to Power Wire with Claims

According to the configuration shown in FIG. 7, the protrusions 74 (dispersion prevention portion) and the attachment portions 21d and 22d (dispersion prevention portion) of the first and second motor generators 21 and 22 that prevent dispersion of the lubricant A (coolant) from the storage portion 33 to the power wire 70 (current flow member) are provided inside the motor case 12 (case; first case).

The dispersion prevention portion includes the protrusions 74 that protrude inward of the motor case 12 (case; first case) from the inner surface of the outer periphery of the motor case 12 (case; first case).

The attachment portions 21d and 21e protruding from the outer periphery of the first motor generator 21 (motor) outward of the first motor generator 21 (motor) in the radial direction of the shaft 21a of the first motor generator 21 (motor) are provided.

The first motor generator 21 (motor) is attached by the attachment portions 21d and 21e to the outer periphery of the motor case 12 (case) at a portion (wall 14 of motor case 12) facing the first motor generator 21 (motor) in the longitudinal direction of the shaft 21a of the first motor generator 21 (motor).

The attachment portions 22d and 22e protruding from the outer periphery of the second motor generator 22 (motor) outward of the second motor generator 22 (motor) in the radial direction of the shaft 22a of the second motor generator 22 (motor) are provided.

The second motor generator 22 (motor) is attached by the attachment portions 22d and 22e to the outer periphery of the motor case 12 (case) at a portion (wall 14 of motor case 12) facing the second motor generator 22 (motor) in the longitudinal direction of the shaft 22a of the second motor generator 22 (motor).

The dispersion prevention portion includes the attachment portion 21d of the first motor generator 21 (motor) that is positioned in the area B1 between the first relay terminal 75 and the storage portion 33, as viewed in the longitudinal direction of the shaft 21a of the first motor generator 21 (motor).

The dispersion prevention portion includes the attachment portion 22d of the second motor generator 22 (motor) that is positioned in the area B2 between the second relay terminal 76 and the storage portion 33, as viewed in the longitudinal direction of the shaft 22a of the second motor generator 22 (motor).

### First Alternative Embodiment of Invention

Instead of being supplied to the first and second motor generators 21 and 22, the lubricant A from the oil pump 34 may be supplied to the first and second inverters 71 and 72 (corresponding to cooling targets) to cool the first and second inverters 71 and 72, and may also be supplied to other cooling targets.

### Second Alternative Embodiment of Invention

Instead of using the lubricant A as the coolant, cooling water may be used as the coolant.

With the aforementioned configuration, a configuration need only be adopted in which cooling water from a cooling water pump (not shown) is supplied to the first and second motor generators 21 and 22 or the first and second inverters 71 and 72, and not to the inside of the gear case 17. In this case, the lubricant of the transmission case 13 may be supplied to the inside of the gear case 17 by another pump (not shown).

In the case of using cooling water, a configuration need only be adopted in which, the first and second motor generators 21 and 22 or the first and second inverters 71 and 72 are cooled, not by being directly sprayed with cooling water, but by providing water channels for cooling (not shown) in the first and second motor generators 21 and 22 or in the first and second inverters 71 and 72 and supplying cooling water to the water channels.

### Third Alternative Embodiment of Invention

In addition to the protrusion 74 on the upper end portion of the right end portion 33a of the storage portion 33, there may also be provided another protrusion 74 on the portion between the protrusion 74 on the right end portion 33a and the first relay terminal 75.

In addition to the protrusion 74 on the upper end portion of the left end portion 33b of the storage portion 33, there may also be provided another protrusion 74 on the portion between the protrusion 74 on the left end portion 33b and the second relay terminal 76.

### Fourth Alternative Embodiment of Invention

The attachment portions 21d and 21e of the first motor generator 21 may be bolted to the wall 15, which is the outer periphery of the motor case 12.

The attachment portions 22d and 22e of the second motor generator 22 may be bolted to the wall 15, which is the outer periphery of the motor case 12.

### Fifth Alternative Embodiment of Invention

The first motor generator 21 may be provided with a large number of attachment portions 21d and 21e, and two or more of the attachment portions 21d of the first motor generator 21 may be positioned in the area B1.

The second motor generator 22 may be provided with a large number of attachment portions 22d and 22e, and two or more of the attachment portions 22d of the second motor generator 22 may be positioned in the area B2.

### Sixth Alternative Embodiment of Invention

The first relay terminal 75 may be provided on the outer periphery of the motor case 12 at a portion facing diagonally upward to the right of the first motor generator 21 or at a portion facing upward of the first motor generator 21.

The second relay terminal 76 may be provided on the outer periphery of the motor case 12 at a portion facing diagonally upward to the left of the second motor generator 22 or at a portion facing upward of the second motor generator 22.

With the aforementioned configuration, even if the lubricant A disperses toward the power wire 70 from the storage portion 33 through the areas B1 and B2, the lubricant A is unlikely to reach the power wire 70.

### Seventh Alternative Embodiment of Invention

Instead of providing the first and second motor generators 21 and 22, one motor generator (not shown) may be provided in the motor case 12, and one relay terminal (not shown) and one inverter (not shown) may be provided.

### Eighth Alternative Embodiment of Invention

The tractor may be constituted as an electric tractor by eliminating the engine 5 and providing one or more motors (not shown) instead of the first and second motor generators 21 and 22.

With the aforementioned configuration, the first planetary device 23, the second planetary device 24, and the forward-reverse switching device 27 also need not be provided in the transmission case 13.

### Industrial Applicability

The present invention can be applied not only to tractors but also to work vehicles for loading and transporting goods, work vehicles for pulling trolleys and the like, and construction work vehicles such as wheel loaders, and to work vehicles equipped with crawler-type travel devices instead of front and back wheels.

### Description of Reference Signs

- 1: Front wheel (travel device)
- 2: Back wheel (travel device)
- 5: Engine
- 12: Motor Case (case)
- 13: Transmission case
- 21: First Motor Generator (motor generator; motor)
- 21a: Shaft
- 21c: Right end portion (end portion)
- 21d: Attachment portion (dispersion prevention portion)
- 21e: Attachment portion
- 22: Second motor generator (motor generator; motor)
- 22a: Shaft
- 22c: Left end portion (end portion)
- 22d: Attachment portion (dispersion prevention portion)
- 22e: Attachment portion
- 23: First planetary device (transmission)
- 24: Second planetary device (transmission)
- 33: Storage portion
- 33a: Right end portion (end portion)
- 33b: Left end portion (end portion)
- 34: Pump (oil pump)
- 64: Front-wheel output shaft (transmission shaft)
- 66: Partition
- 70: Power wire (current flow member)
- 71: First inverter (inverter)
- 72: Second inverter (inverter)
- 73: Battery
- 74: Protrusion (dispersion prevention portion)
- 75: First relay terminal (relay terminal)
- 76: Second relay terminal (relay terminal)
- A: Lubricant (coolant)
- A1: Liquid level
- B1: Area
- B2: Area

## Claims

1. A work vehicle comprising:
at least one travel device;
a battery;
a motor configured to supply power to the at least one travel device;
a case housing the motor;
an inverter configured to operate the motor;
a storage portion provided downward of the motor inside the case and storing coolant; and
a pump configured to supply the coolant to a cooling target.

2. The work vehicle according to claim 1, further comprising:
a relay terminal provided on an outer periphery of the case and connected to the inverter;
a current flow member provided inside the case and connected between the motor and the relay terminal; and
a dispersion prevention portion provided inside the case and configured to prevent dispersion of the coolant from the storage portion to the current flow member.

3. The work vehicle according to claim 2, further comprising:
a protrusion protruding inward of the case from an inner surface of the outer periphery of the case,
wherein the dispersion prevention portion includes the protrusion.

4. The work vehicle according to claim 3, wherein the coolant stored in the storage portion is set to an amount at which a liquid level of the stored coolant is lower than the protrusion.

5. The work vehicle according to any one of claims 2 to 4, further comprising:
a plurality of attachment portions protruding from an outer periphery of the motor outward of the motor in a radial direction of a shaft of the motor,
wherein the motor is attached by the attachment portions to the outer periphery of the case at a portion facing the motor in a longitudinal direction of the shaft of the motor, and
the dispersion prevention portion includes any of the plurality of attachment portions positioned in an area between the relay terminal and the storage portion as viewed in the longitudinal direction of the shaft of the motor.

6. The work vehicle according to any one of claims 1 to 5, further comprising:
a relay terminal provided on an outer periphery of the case and connected to the inverter; and
a current flow member provided inside the case and connected between the motor and the relay terminal,
wherein the relay terminal is provided on the outer periphery of the case at a portion horizontally outward of the motor, and
an end portion of the storage portion that is closer to the relay terminal is provided more on an inward side of the case than is an end portion of the motor that is closer to the relay terminal.

7. The work vehicle according to any one of claims 1 to 6, further comprising:
a transmission case housing a transmission and coupled to the case;
a partition passing through the storage portion inside the case and forming an area partitioned from the inside of the case; and
a transmission shaft configured to transmit power from the transmission to a front travel device included in the at least one travel device and passing through the area of the partition,
wherein power from the motor is transmitted to the transmission, and from the transmission to a back travel device included in the at least one travel device, and
the inside of the case is partitioned from the inside of the transmission case.

8. The work vehicle according to any one of claims 1 to 7, further comprising an engine separate from the motor,
wherein the motor is a motor generator, and
power from the engine and power from the motor generator are combined to generate combined power and the combined power is transmitted to the at least one travel device.
